# NEUE EUROPÄISCHE PATENTSCHRIFT

(11) **EP 0 160 632 B2**
(45) Veröffentlichungstag und Bekanntmachung des Hinweises auf die Entscheidung über den Einspruch: **13.09.1995**
(45) Hinweis auf die Patenterteilung: 17.05.1989
(21) Anmeldenummer: 85870040.4
(22) Anmeldetag: 19.03.1985
(51) Int. Cl.: B29C 47/02

(54) **Verfahren und Vorrichtung zur Herstellung flexibler Kabelschutzrohre mit Kabeleinziehdraht**
Method and apparatus for the production of a flexible protection tube into which is drawn a wire
Procédé et dispositif pour la production d'une gaine de protection flexible entourant un câble

(30) Priorität: 20.03.1984 BE 212598
(43) Veröffentlichungstag der Anmeldung: 06.11.1985
(60) Teilanmeldung: 87116088.3
(73) Patentinhaber: Kabelwerk Eupen AG Cablerie d'Eupen SA Kabelfabriek Eupen NV, B-4700 Eupen (BE)
(72) Erfinder: Pelzer, Rudolf, D-5120 Herzogenrath (DE)
(74) Vertreter: Prechtel, Jörg, Dipl.-Phys. Dr.

(56) Entgegenhaltungen:
- EP-B- 0 274 018
- DE-A- 2 329 266
- DE-A- 2 353 110
- FR-A- 2 397 934
- FR-A- 2 397 934
- FR-A- 2 492 603
- FR-A- 2 497 142
- GB-A- 1 526 777
- GB-A- 1 561 466
- LU-A- 41 916
- US-A- 2 644 983
- US-A- 3 211 818
- US-A- 3 899 384
- US-A- 4 137 623
- US-A- 4 154 783
- US-A- 4 302 073
- US-A- 4 378 299

## Beschreibung

Die Erfindung betrifft ein Verfahren zur Herstellung flexibler Kabelschutzrohre mit Kabeleinziehdraht, wobei man den Kabeleinziehdraht in einen Kabelschutzrohr-Spritzkopf einführt und in einem vom Kabelschutzrohr-Spritzkopf abstehenden Drahtführungsrohr weiterleitet, welches den Draht bis zur wenigstens teilweisen Verfestigung des Kabelschutzrohres in Abstand von der Kabelschutzrohrinnenfläche hält und wobei man den Kabeleinziehdraht mit einer Drahtvorschubgeschwindigkeit vorschiebt, welche wenigstens gleich der Kabelschutzrohr-Extrusionsgeschwindigkeit ist.

Aus der FR-A-23 97 934 ist es bekannt, einen Einziehdraht über einen gekrümmten Kanal in das im Spritzkopfinneren beginnende Drahtführungsrohr einzuführen. Um dem Kabelschutzrohr eine vorgegebene Welligkeit aufzuprägen, wird Preßluft über das Kabelschutzrohr in eine nach vorne von einem am Kabelschutzrohr angebrachten Verdickungsteil begrenzte Ringkammer innerhalb des frisch gespritzten Kabelschutzrohres eingeblasen, um das noch weiche Rohrmaterial radial nach außen gegen eine Form zu drücken. Über nicht dargestellte Antriebsmittel soll bei der bekannten Anordnung erreicht werden, daß die Drahtvorschubgeschwindigkeit gleich der Rohr-Extrusionsgeschwindigkeit ist. Es hat sich jedoch herausgestellt, daß die dargestellte Verfahrensweise nicht zur Herstellung außerordentlich langer Kabelschutzrohre mit Kabeleinziehdraht, beispielsweise im Bereich von 1 000 bis 2 000 Metern, geeignet ist. Der bei der bekannten Verfahrensweise offenbar ungerichtet in den Spritzkopf eingeschobene Draht wird im gekrümmten Kanal zusätzlich gebogen, so daß auch bei ziemlich langem Drahführungsrohr eine Rest-Welligkeit des Ziehdrahts Innerhalb des Kabelschutzrohres unvermeidlich ist Diese ist jedoch nicht nur deshalb störend, weil hierdurch die erforderlichen Zugkräfte beim späteren Einziehen des jeweiligen Kabels entsprechend erhöht sind, sondern auch deshalb, weil die Gefahr besteht, daß der aus dem Kabelführungsrohr austretende Draht in Berührung mit der noch nicht vollständig verfestigten Kabelschutzrohrwandung gelangt. Auch ist das bekannte Verfahren für dünne, nicht allzu biegesteife Kabeleinziehdrähte ungeeignet, da es bei derartigen Drähten zu einem Stau im gekrümmten Kanal innerhalb des Spritzkopfes kommen kann.

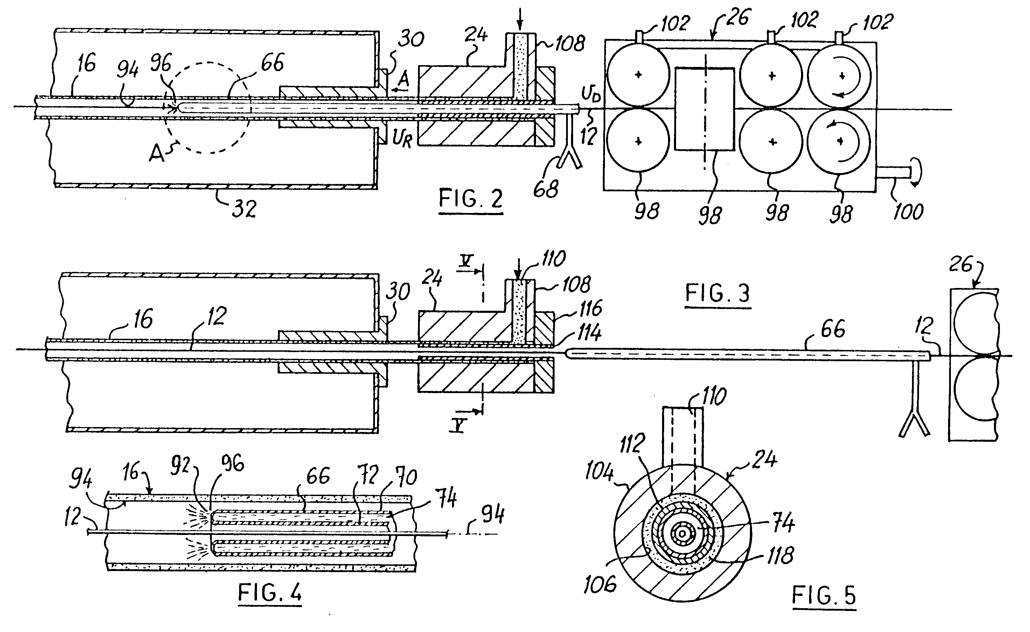

Die US-A-3 899 384 befaßt sich mit der Herstellung von Seilzug-Ankern zum Nachspannen von vorgespanntem Beton. Der Zuganker besteht aus einem Drahtseil mit Fettschicht und darübergezogener Plastikschutzhülle. Die Schutzhüllen-Extrusionsgeschwindigkeit ist geringer als die Drahtvorschubgeschwindigkeit (Anspruch 3). Das Drahtseil hat einen Durchmesser von 9,5 bis 12,6 mm, die Fettschicht ist 0,38 bis 0,5 mm und die Wand der Plastikschutzhülle 0,5 mm dick. Die Fettschicht wird durch eine Art Kreisrakel (Figur 2) auf das Drahtseil gestrichen. Demgegenüber liegen die Dimensionen von Lichtwellenleiter-Kabelschutzrohren mit einem Außendurchmesser zwischen 32 und 90 mm und einer Wandstärke zwischen 2 und 8 mm in einem ganz anderen Bereich. Wesentlich ist auch der luftgefüllte Hohlraum zwischen der Rohrwandung und dem Ziehdraht, der zur späteren Aufnahme des wesentlich dickeren Kabels unabdingbar ist

Die Aufgabe der Erfindung liegt darin, ein Verfahren der eingangs genannten Art bereitzustellen, welches die Herstellung von Kabelschutzrohren mit bereits bei der Herstellung eingezogenem Kabeleinziehdraht erlaubt mit erheblich vergrößerter Verlegungslänge.

Diese Aufgabe wird dadurch gelöst, daß man den Kabeleinziehdraht in einer Draht-Richteinrichtung richtet und unmittelbar anschließend in das den Spritzkopf durchquerende Drahtführungsrohr einschiebt, und daß man über das Drahtführungsrohr zugeführtes Gleitmittel im Bereich des Drahtführungsrohrendes auf den Kabeleinziehdraht sowie auf die Kabelschutzrohr-Innenfläche sprüht.

Der vor dem Einführen in den Spritzkopf gerichtete Draht braucht anschließend nicht mehr gebogen werden, da er unmittelbar in das den Spritzkopf durchquerende Drahtführungsrohr konzentrisch zur Rohrachse eingeführt werden kann. Das Besprühen sowohl des Kabeleinziehdrahts als auch des Innenumfangs des Kabelschutzrohrs mit Gleitmittel erfolgt im Bereich des Rohrspritzkopfendes, also in einem Bereich, in welchem das Rohrmaterial zum einen nicht mehr so heiß ist, daß es zu unerwünschten Reaktionen zwischen den Materialien kommt, und zum anderen noch so warm ist, daß das aufgesprühte Gleitmittel gut haftet. Der absolut geradlinige Draht innerhalb des Schutzrohres in Verbindung mit der Gleitmittelbeschichtung ergibt einen derart niedrigen Reibungskoeffizienten zwischen Draht und Kabelschutzrohr, daß der Reibungswiderstand zwischen Kabeleinziehdraht und Schutzrohr auch bei extrem großen Verlegungslängen vergleichsweise niedrig ist. Die Gleitmittelschicht an der Kabelschutzrohr-Innenwandung trägt zudem zur entsprechenden Reduzierung des Reibungswiderstands zwischen dem einzuziehenden Kabel und dem Kabelschutzrohr bei. Das geradlinige Einschieben des gerichteten Kabeleinziehdrahts durch den Spritzkopf hindurch in das Kabelschutzrohr ist sowohl bei dünnen, nicht sehr steifen Drähten, also auch bei dicken, steifen Drähten ohne weiteres mit der geforderten Genauigkeit in Abstimmung mit der Rohr-Extrusionsgeschwindigkeit möglich, so daß der Draht innerhalb des aufgewickelten Kabelschutzrohres im wesentlichen entlang der Rohrachse verlaufen kann. Beim Ausrollen des Kabels wird hierdurch zuverlässig verhindert, daß eines der beiden Einziehdrahtenden in das Kabelschutzrohr zurückgleitet.

Erfindungsgemäß kann man als Gleitmittel ein Mineral-Öl, ein Silikon-Öl oder andere organische Flüssigkeiten verwenden, wie z. B. Glycerin. Man kann auch als Gleitmittel organische Medien verwenden, wie z. B. Wachs, insbesondere Paraffine oder Olefine oder PTFE (Polytetrafluorethylen).

Das Versprühen des Gleitmittels unter Gaszufuhr (mit Treibgas) oder unter Flüssigkeitsdruck sorgt für eine gleichmäßige Gleitschichtbildung.

Die Erfindung betrifft ferner eine Vorrichtung zur Herstellung von Kabelschutzrohren nach dem vorstehend beschriebenen Verfahren, mit einem Kabelschutzrohr-Spritzkopf, in welchen der Kabeleinziehdraht einführbar ist, einem vom Kabelschutzrohr-Spritzkopf abstehenden Drahtführungsrohr, welches den Draht bis zur wenigstens teilweisen Verfestigung des Kabelschutzrohrs in Abstand von der Kabelschutzrohr-Innenfläche hält, einer Drahtvorschubeinrichtung zum Vorschieben des Kabeleinziehdrahts durch den Spritzkopf in das Drahtführungsrohr.

Diese Vorrichtung ist erfindungsgemäß dadurch gekennzeichnet, daß eine Draht-Richteinrichtung für den Kabeleinziehdraht unmittelbar vor dem Einschieben des Kabeleinziehdrahts in das Drahtführungsrohr vorgesehen ist, und daß über das Drahtführungsrohr Gleitmittel zuführbar ist zum Besprühen des Kabeleinziehdrahts sowie der Kabelschutzrohrinnenfläche im Bereich des Drahtführungsrohrendes. Diese Vorrichtung erlaubt die Herstellung von Kabelschutzrohren mit bereits bei der Herstellung eingezogenem Kabeleinziehdraht und zwar mit erheblich vergrößerter Verlegungslänge.

Um die Bedienung der Vorrichtung zu vereinfachen, insbesondere um beim Anfahren der Vorrichtung das Kalibrieren des Kabelschutzrohres durch das Drahtführungsrohr ungehindert vornehmen zu können, wird vorgeschlagen, daß das Drahtführungsrohr im Rohrspritzkopf axial verschiebbar ausgebildet ist. Das Drahführungsrohr kann dann aus dem Rohrspritzkopf ggf. ganz herausgezogen werden, solange bis die Vorrichtung so weit eingestellt ist, daß ein einwandfreies kalibriertes Kabelschutzrohr erzeugt wird.

In Weiterbildung der Erfindung wird vorgeschlagen, daß das Drahtführungsrohr als Gleitmittelzuführung doppelwandig ausgebildet ist. Das Drahtführungsrohr kann somit eine Doppelfunktion wahrnehmen, nämlich neben der Führung des Drahtes auch noch die Schmierung von Draht und Rohrinnenfläche.

Um in einfacher Weise sowohl Draht als auch Rohrinnenfläche gleichzeitig durch wenigstens eine Gleitmittel-Spritzdüse mit Gleitmittel versehen zu können, wird vorgeschlagen, daß an dem in das Kabelschutzrohr hineinragenden Drahtführungsrohrende wenigstens eine Gleitmittel-Spritzdüse vorgesehen ist.

Um in zuverlässiger Weise ein Einschieben des Drahtes mit der gewünschten Geschwindigkeit mit baulich einfachen Mitteln zu erreichen, wird eine als Drahtrichteinrichtung ausgebildete Drahtvorschubeinrichtung mit wenigstens einem, am besten 4 synchron angetriebenen DruckrollenPaaren vorgeschlagen, zwischen welchen der Kabeleinziehdraht verläuft. Im Falle von 4 synchron angetriebenen Druckrollen-Paaren ist absolut sichergestellt, daß kein Schlupf zwischen Draht und den Druckrollen auftritt, so daß eine an die Druckrollen gekoppelte Meßeinheit eine genaue Messung der Drahtvorschubgeschwindigkeit zuläßt. Auch ist der die Drahtvorschubeinrichtung verlassende Draht gerichtet, so daß eine gesonderte Draht-Richteinrichtung nicht mehr erforderlich ist. Zur genauen Abstimmung der Drahtvorschubgeschwindigkeit mit der Rohr-Extrusionsgeschwindigkeit wird eine vorzugsweise an eine der Druckrollen gekoppelte Meßeinheit zur Messung der Drahtvorschubgeschwindigkeit vorgeschlagen, vorzugsweise in Form eines digitalen Meßwertaufnehmers. Zur Messung der Rohr-Extrusionsgeschwindigkeit wird eine vorzugsweise mit einem auf dem Kabelschutzrohr abrollenden Tastrad verbundene Geschwindigkeits-Meßeinheit vorgeschlagen. Um Schlupf zu vermeiden ist das Tastrad gegen das Kabelschutzrohr vorgespannt, am einfachsten aufgrund seines Gewichts.

Zur genauen gegenseitigen Abstimmung der beiden Geschwindigkeiten wird eine an die beiden Meßeinheiten angeschlossene Auswerteschaltung vorgeschlagen, welche aus der Differenz der gemessenen Geschwindigkeiten ein Regelsignal zur Regelung der Drahtvorschubgeschwindigkeit und/oder der Rohr-Extrusionsgeschwindigkeit abgibt, im Sinne der Verringerung der Differenz.

Hierbei kann die Auswerteschaltung eine Rohrlängen-Feststelleinheit umfassen. Bei Verwendung digitaler Meßwertaufnehmer genügt es, wenn die Rohrlängen-Feststelleinheit einen an einen der beiden digitalen Meßwertaufnehmer angeschlossenen Impulszähler als wesentliches Bauelement umfaßt.

Die Erfindung betrifft schließlich ein Kabelschutzrohr mit eingesetztem Kabeleinziehdraht gemäß den Merkmalen des Anspruchs 15

Die Erfindung wird im folgenden an einem Ausführungsbeispiel an Hand der beigefügten Zeichnung erläutert. Es zeigt :
Fig. 1 eine schemaartige Gesamtansicht einer erfindungsgemäßen Vorrichtung zur Herstellung flexibler Kabelschutzrohre mit Kabeleinziehdraht ;
Fig. 2 eine Detailansicht teilweise im Schnitt der Anordnung in Fig. 1 im Bereich des Rohrspritzkopfes ;
Fig. 3 die Anordnung gemäß Fig. 2, jedoch mit herausgezogenem Drahtführungsrohr ;
Fig. 4 das Detail A in Fig. 2 in vergrößertem Maßstab ;
Fig. 5 einen Schnitt nach Linie V-V in Fig. 3 durch den Kabelspritzkopf.

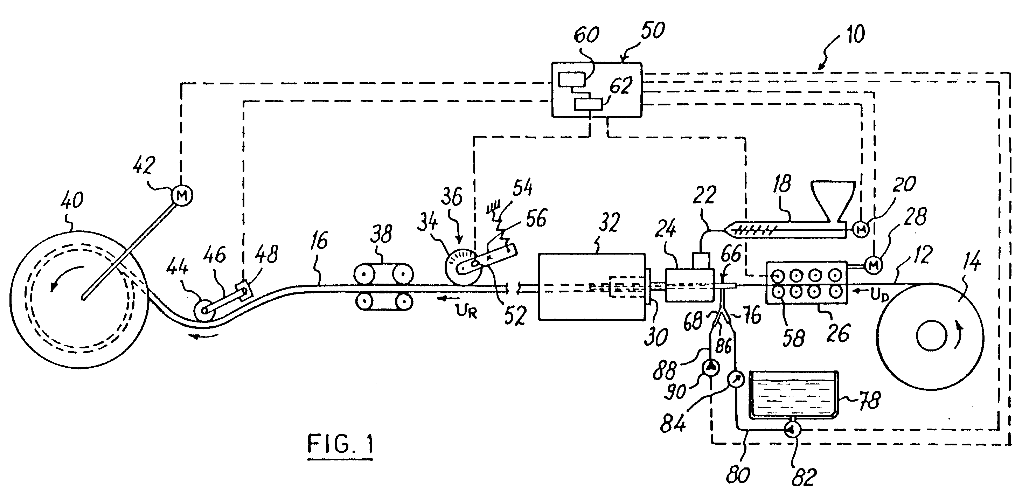

Die in Fig. 1 schemaartig dargestellte Vorrichtung 10 zur Herstellung von Kabelschutzrohren mit Kabeleinziehdraht erhält den Draht 12 beispielsweise von einer Spule 14 und das Kunststoffmaterial für das Kabelschutzrohr 16 von einem Schneckenextruder 18 mit Extruder-Antriebsmotor 20. Vom Schneckenextruder 18 führt eine Leitung 22 in einen Rohrspritzkopf 24, welcher in den Figuren 2, 3 und 5 in weiteren Einzelheiten dargestellt ist. Der Rohrspritzkopf (Rohr-Offset-Spritzkopf) 24 erhält ferner den Draht 12 über eine Draht-Vorschubeinrichtung 26 zugeliefert. Ein Antriebsmotor der Draht-Vorschubeinrichtung 26 ist in Fig. 1 mit 28 bezeichnet Das vom Rohrspritzkopf 24 abgegebene, noch nicht erhärtete Kabelschutzrohr 16 samt eingesetztem Draht 12 durchläuft eine Kalibrierhülse 30 in einer Stirnwand eines Kühlgehäuses 32. Im Kühlgehäuse 32 befinden sich in nicht dargestellter Weise eine Reihe von Abkühlbecken zur Abkühlung des Kabelschutzrohrs auf Raumtemperatur Das abgekühlte Kabelschutzrohr wird mittels eines nicht dargestellten Bedruckungsgeräts, beispielsweise mit einer Kabelkennzeichnung, bedruckt. Es schließt sich ein in Fig. 1 wiederum dargestelltes Tastrad 34 an als Teil eines digitalen Meßwertaufnehmers 36 zur Messung der Rohrextrusionsgeschwindigkeit v_{R}. Es folgt eine Rohr-Vorschubeinrichtung (Abzug) 38 welche auf die Rohrextrusionsgeschwindigkeit v_{R} eingestellt ist, Das fertige Kabelschutzrohr wird auf eine Aufwickelspule 40 aufgewickelt, welche von einem Motor 42 angetrieben ist. Der Regelung der Drehgeschwindigkeit des Motors 42 dient eine Durchhang-Steuerung welche durch eine sog. Tänzerrolle 44 verwirklicht sein kann. Die Rolle 44 ist an einem Schwenkhebel 46 gelagert, wobei der Schwenkwinkel von einer Winkelmeßeinheit 48 gemessen wird.

Eine durch einen Block 50 symbolisierte Auswerteschaltung steuert die Vorrichtung 10. Sie ist hierzu über entsprechende, strichliert angedeutete Leitungen sowohl mit den Motoren 20, 28 und 42 verbunden als auch mit der Winkelmeßeinheit 48 und der Geschwindigkeits-Meßeinheit 36, insbesondere mit einem digitalen Meßwertaufnehmer 52 in Form beispielsweise eines optischen Abtastkopfes, welcher ein Strichraster des Rades 34 abtastet. Hierzu kann der Meßwertaufnehmer 52 an einem das Rad 34 halternden in Richtung auf das Rohr 16 vorgespannten (Zugfeder 54 am anderen Hebelarm) angebrachten Doppelarmhebel 56 angebracht sein. Zur Messung der Draht-Vorschubgeschwindigkeit v_{D} ist die Auswerteschaltung 50 ferner mit der Drahtvorschubeinrichtung 26 verbunden, insbesondere mit einem Drehgeschwindigkeitsmesser an einer Druckrolle 58 der aus insgesamt 4 Druckrollen-Paaren aufgebauten Draht-Vorschubeinrichtung 26.

Die Auswerteschaltung 50 regelt nun die Draht-Vorschubgeschwindigkeit v_{D} durch entsprechende Ansteuerung des Motors 28 derart, daß die Differenz zwischen der Drahtvorschubgeschwindigkeit v_{D} und der Rohrextrusionsgeschwindigkeit v_{R} verschwindet. Die Auswerteschaltung 50 kann eine Anzeige, insbesondere Digitalanzeige 60, aufweisen, um den Ist-Wert der Draht-Vorschubgeschwindigkeit anzuzeigen und ggf. die effektive Draht- und Rohrlänge, um die ggf. automatische Herstellung von Chargen mit unterschiedlicher Rohrlänge zu ermöglichen. Zur Messung der effektiven Rohrlänge kann es genügen, wenn man einen Impulszähler 62 an den digitalen Meßwertaufnehmer 52 anschließt, da die aufgezählten Impulse zur jeweiligen Rohrlänge proportional sind.

In Fig. 1 erkennt man schließlich noch ein in den Figuren 2 bis 5 detaillierter dargestelltes Drahtführungsrohr 66, mit einem gabelförmigen Anschlußrohr 68. Das Drahtführungsrohr 66 ist gemäß den Fig. 4 und 5 doppelwandig ausgebildet, mit einer äußeren Rohrwand 70 und einer inneren Rohrwand 72. In den zwischen den beiden Wänden 70 und 72 gebildeten Ringraum 74 mündet das Anschlußrohr 68 ein Der eine Gabelschenkel 76 des Anschlußrohrs 68 ist mit einem Gleitmittel-Vorratsbehälter 78 verbunden, und zwar über eine Leitung 80. In der Leitung 80 befindet sich eine Zuführpumpe 82 sowie ggf. ein Druckmesser 84. Die Pumpe 82 ist über eine Steuerleitung mit der Auswerteschaltung 50 verbunden, so daß die Gleitmittel-Zufuhr in den Ringraum 74 des Drahtführungsrohrs 70 durch die Auswerteschaltung 50 automatisch steuerbar ist. Als Gleitmittel kommt Mineralöl, Silikonöl, Glycerin, Wachs oder dergl. in Frage. An den anderen Gabelschenkel 86 des Anschlußrohres 68 ist eine Druckluftleitung 88 angeschlossen, welche in einem Druckluftmotor 90 endet. Dieser Druckluftmotor 90 ist wiederum mit der Auswerteschaltung 50 zur Steuerung der Vorrichtung 10 verbunden. Durch das Anschlußrohr 68 am in den Fig. 1 bis 4 rechten Ende des Drahtführungsrohrs 66 kann also im vorgegebenen Verhältnis Druckluft und Gleitmittel in den Ringraum 74 gepreßt werden, um dann durch Gleitmittel-Spritzdüsen 92 am in den Fig. 1 bis 4 linken Ende des Drahtführungsrohrs 66 hindurch sowohl auf die Rohrinnenfläche 94 als auch auf den Umfang des Drahtes 12 gesprüht zu werden.

Die Spritzdüsen 92 können beispielsweise dadurch gebildet werden, daß man die am Rohrende zusammengebogenen und miteinander dicht verbundenen, insbesondere verschweißten, Wände 70 und 72 dort mit axialen Bohrungen versieht.

Das Drahtführungsrohr 66 ist in Richtung seiner Rohrachse 96 verschiebbar gelagert, und zwar zwischen einer in Fig. 2 dargestellten, am weitesten links liegenden Arbeitsposition und einer am weitesten rechts liegenden Rückzugsposition gemäß Fig. 3. In der Arbeitsposition befindet sich das linke Rohrende in einem derart großen Abstand vom Spritzkopf 24, daß das vom Rohrspritzkopf 24 erzeugte und bis in den Bereich des Rohrendes 96 gelangte Kabelschutzrohrmaterial bereits teilweise verfestigt ist. Der innerhalb der inneren Wand 72 des Drahtführungsrohrs 66 geführte, im Idealfall konzentrisch zur Rohrachse verlaufende Draht 12, darf folglich anschließend an das Rohrende 96 ohne weiteres die Rohrinnenfläche 94 berühren, ohne daß befürchtet werden muß, daß der Draht 12 an der Rohrinnenfläche 94 festklebt, oder gar in die Rohrwand eindringt. Während das Kabelschutzrohr 16 also in Richtung A der Fig. 2 (von rechts nach links) mit der Rohrextrusionsgeschwindigkeit v_{R} am Rohrende 96 vorbeibewegt wird, wird die Rohrinnenfläche 94 mit Gleitmittel besprüht, dementsprechend auch der in der gleichen Richtung und möglichst mit derselben Geschwindigkeit sich bewegende Draht 12.

Für die richtige Draht-Vorschubgeschwindigkeit v_{D} sorgt die bereits erwähnte Draht-Vorschubeinrichtung 26, welche gemäß Fig. 1 und 2 aus 4 Druckrollen-Paaren 98 besteht sowie einer Vorgelegewelle 100. Man erkennt ferner Einstellschrauben 102 für die gegenseitige Andruckkraft der Druckrollen-Paare 98. Um ein Richten des Drahtes in zwei zueinander senkrechten Richtungen zu erreichen, ist beispielsweise eines der 4 Druckrollen-Paare um 90° gegenüber den anderen verdreht angeordnet.

Der grundlegende Aufbau des Rohrspritzkopfs 24 geht aus den Fig. 2, 3 und 5 hervor. Ein zur Rohrachse 94 koaxialer zylindrischer Grundkörper 104 weist eine durchgehende Axialbohrung 106 auf, deren Durchmesser im wesentlichen dem Außendurchmesser des Kabelschutzrohres 16 entspricht. Ein an den Schneckenextruder 18 gemäß Fig. 1 angeschlossener Zuführstutzen 108 des Grundkörpers 104 ist mit einer in die Bohrung 106 radial einmündenden Zuführbohrung 110 versehen, durch welche das plastifizierte Kunststoffmaterial in die Bohrung 106 transportiert wird. Ein in den Figuren mit einer Kreuz-Schraffur versehener, hülsenförmiger Spritzdorn 112 durchsetzt die Bohrung 106 über ihre gesamte Länge und ist in einer entsprechend dimensionierten Aufnahmebohrung 114 einer am Grundkörper 24 befestigten Abschlußplatte 116 gelagert. Der Außendurchmesser des Spritzdorns 112 entspricht im wesentlichen dem Innendurchmesser des herzustellenden Kabelschutzrohres 16. Auf diese Weise wird ein an den Kanal 110 angeschlossener Ringraum 118 zwischen dem Innenumfang der Bohrung 106 und dem Außenumfang des Dorns 112 gebildet, welcher dem Kabelschutzrohr-Querschnitt entspricht. Durch Zuführen von plastifiziertem Kunststoffmaterial in diesen Raum unter Druck durch die Leitung 110 erreicht man, daß am in den Fig. 2 und 3 linken Ende der Bohrung 106 das noch weiche Kunststoffmaterial in Rohrform austritt. In der sich anschließenden Kalibrierhülse 30 wird der Außendurchmesser des Rohres genau auf das gewünschte Maß gebracht. Dabei tritt der Draht 12 in das in Fig. 2 rechte Ende des Drahtführungsrohrs 66 ein. An diesem Ende sind die beiden Wände 70 und 72 miteinander abdichtend verbunden, insbesondere durch Verschweißen, so daß der Ringraum 74 gemäß Fig. 1 allseits geschlossen ist, bis auf die Düsen 92 am gegenüberliegenden Ende und auf das gabelförmige, in den Ringraum 74 einmündende Anschlußrohr 68.

Wie die Fig. 2 und 5 zeigen, entspricht der Innendurchmesser des hülsenförmigen Spritzdorns 112 gerade dem Außendurchmesser des Drahtführungsrohrs 66, so daß das Drahtführungsrohr 66 von der Hülse 112 angenähert koaxial zum Kabelschutzrohr 16 gehalten wird. Der sich an den Rohrspritzkopf 24 nach links bis zum Rohrende 96 anschließende Rohrabschnitt hat daher stets ausreichenden Abstand zum Kabelschutzrohr 16.

Dieser Abstand ist jedoch beim Anfahren der Vorrichtung 10 nicht gewährleistet, da das Vorlaufende des im Spritzkopf 24 hergestellten Kabelschutzrohres nicht formstabil ist. Auch kann es anfänglich an der Kalibrierhülse 30 zu einem Materialstau kommen. Beim Anfahren der Vorrichtung 10 wird folglich das Drahtführungsrohr 66 in seine Rückzugsstellung gemäß Fig. 3 zurückgezogen, wobei ggf. auch die Drahtvorschubeinrichtung 26 entsprechend zurückzuziehen ist. Sobald ein gut kalibriertes Kabelschutzrohr vorliegt, wird das Drahtführungsrohr 66 durch das rechtsseitige Ende des Rohrspritzkopfes 24 bis in die Arbeitsposition gemäß Fig. 2 vorgeschoben. Dann wird im Schnellgang der Draht-Vorschubeinrichtung 26 von dieser der Draht 12 in das Kabelschutzrohr 16 eingeschoben, bis er das freie Rohrende erreicht hat. Dann erst wird die vorstehend beschriebene Auswerteschaltung 50 in Gang gesetzt, welche die Draht-Vorschubgeschwindigkeit v_{D} an die Rohrextrusionsgeschwindigkeit v_{R} anpaßt.

Aufgrund der gleichen Geschwindigkeiten ergibt sich auch exakt die gleiche Länge von Kabelschutzrohr 16 und innerhalb des Kabelschutzrohrs verlaufendem Einziehdraht 12 (in gestrecktem Zustand des Kabelschutzrohrs 16). Von den elastischen Eigenschaften des Kabelschutzrohres beim Aufwickeln auf die Trommel 40 gemäß Fig. 1 abhängig, folgt der Draht 12 mehr oder weniger der Rohrachse des aufgewickelten Kabelschutzrohres.

Das Kabelschutzrohr besteht vorzugsweise aus Hochdruck (High-Density)-Polyethylen (HDPE). Da die einzuziehenden Kabel, insbesondere Lichtwellenleiter-Kabel, entweder mit Polyethylen (PE) oder Weich-Polyvinylchlorid (PVC) ummantelt sind, ergibt sich eine geringe Reibung zwischen Kabel und Rohrwandung beim Einziehen des Kabels aufgrund der Schmierung der Rohrinnenfläche 94 mit Gleitmittel. Da auch der Draht 12 mit Gleitmittel versehen ist, ist auch dessen Reibungskraftbeitrag beim Einziehen eines Kabels gering. Die ringförmig am Drahtführungsrohrende 96 vorgesehenen Sprühdüsen 92 versprühen einen weitgefächerten Schleier feinster Gleitmittel-Tröpfchen, die sich als Hebel auf die Rohrinnenfläche 94 und die Ziehdrahtoberfläche niederschlagen und so für gute Ausnützung des Gleitmittels sorgen. Das Material des Kabelschutzrohrs im Bereich des Rohrendes 96 ist zwar bereits teilweise verfestigt, jedoch noch heiß, so daß das aufgesprühte Gleitmittel haftet.

Sämtliche Vorgänge des Herstellungsprozesses, nämlich die Extrusion des Kabelschutzrohres, das fortwährende Einschieben des Ziehdrahts, das Pumpen und Besprühen mit Gleitmittel, laufen kontinuierlich ab. Nach Beendigung des Herstellungsverfahrens werden der Schneckenextruder 18, die Draht-Vorschubeinrichtung 26 sowie die Pumpen 82, 90 abgeschaltet, sodann die Draht-Vorschubeinrichtung 26 zurückgefahren und das Drahtführungsrohr (doppelwandiges Stahlrohr) aus dem Kabelschutzrohr sowie dem Rohrspritzkopf (Offset-Kopf) herausgezogen.

Erfindungsgemäß können Kabelschutzrohre mit über 1 000m Länge ohne weiteres in einem Stück verlegt werden mit anschließendem Einziehen des Kabels.

## Patentansprüche

1. Verfahren zur Herstellung flexibler Kabelschutzrohre (16) mit Kabeleinziehdraht (12), wobei man den Kabeleinziehdraht (12) in einen Kabelschutzrohr-Spritzkopf (24) einführt und in einem vom Kabelschutzrohr-Spritzkopf (24) abstehenden Drahtführungsrohr (66) weiterleitet, welches den Draht (12) bis zur wenigstens teilweisen Verfestigung des Kabelschutzrohres (16) in Abstand von der Kabelschutzrohrinnenfläche (94) hält und wobei man den Kabeleinziehdraht (12) mit einer Drahtvorschubgeschwindigkeit (v_{D}) vorschiebt, welche wenigstens gleich der Kabelschutzrohr-Extrusionsgeschwindigkeit (v_{R}) ist, dadurch gekennzeichnet, daß man den Kabeleinziehdraht (12) in einer Draht-Richteinrichtung (98) richtet und unmittelbar anschließend in das den Spritzkopf (24) durchquerende Drahtführungsrohr (66) einschiebt und daß man über das Drahtführungsrohr (66) zugeführtes Gleitmittel im Bereich des Drahtführungsrohrendes (96) auf den Kabeleinziehdraht (12) sowie auf die Kabelschutzrohr-Innenfläche (94) sprüht.

2. Verfahren nach Anspruch 1, dadurch gekennzeichnet, daß man als Gleitmittel ein Mineral-Öl, ein Silikon-Öl oder andere organische Flüssigkeiten verwendet wie z.B Glycerin.

3. Verfahren nach Anspruch 1, dadurch gekennzeichnet, daß man als Gleitmittel organische Medien verwendet, wie z. B. Wachs, insbesondere Paraffin oder Olefin oder PTFE (Polytetrafluorethylen).

4. Verfahren nach einem der vorhergehenden Ansprüche, dadurch gekennzeichnet daß man das Gleitmittel, sei es unter Gaszufuhr (mit Treibgas) oder mit Flüssigkeitsdruck, versprüht.

5. Vorrichtung zur Herstellung von Kabelschutzrohren (16) mit Kabeleinziehdraht (12) nach dem Verfahren nach einem der vorhergehenden Ansprüche, mit einem Kabelschutzrohr-Spritzkopf (24), in welchen der Kabeleinziehdraht (12) einführbar ist, einem vom Kabelschutzrohr-Spritzkopf (24) abstehenden Drahtführungsrohr (66), welches den Draht (12) bis zur wenigstens teilweisen Verfestigung des Kabelschutzrohrs (16) in Abstand von der Kabelschutzrohr-Innenfläche (94) hält, einer Drahtvorschubeinrichtung (26) zum Vorschieben des Kabeleinziehdrahts (12) durch den Spritzkopf (24) in das Drahtführungsrohr (66), dadurch gekennzeichnet, daß eine Draht-Richteinrichtung für den Kabeleinziehdraht (12) unmittelbar vor dem Einschieben des Kabeleinziehdrahts (12) in das Drahtführungsrohr (66) vorgesehen ist, und daß über das Drahtführungsrohr (66) Gleitmittel zuführbar ist zum Besprühen des Kabeleinziehdrahts (12) sowie der Kabelschutzrohrinnenfläche (94) im Bereich des Drahtführungsrohrendes (96).

6. Vorrichtung nach Anspruch 5, dadurch gekennzeichnet, daß das Drahtführungsrohr (66) im Rohrspritzkopf (24) axial verschiebbar ausgebildet ist.

7. Vorrichtung nach Anspruch 6, dadurch gekennzeichnet, daß das Drahtführungsrohr (66) zur Gleitmittel-Zuführung doppelwandig (Wände 70, 72) ausgebildet ist.

8. Vorrichtung nach Anspruch 6 oder 7, dadurch gekennzeichnet, daß an dem in das Kabelschutzrohr (16) hineinragenden Drahtführungsrohrende (96) wenigstens eine Gleitmittel-Spritzdüse (92) vorgesehen ist.

9. Vorrichtung nach einem der Ansprüche 5 bis 8, gekennzeichnet durch eine Drahtvorschubeinrichtung (26) als Drahtrichteinrichtung ausgebildet ist mit wenigstens einem, am besten 4 synchron angetriebenen Druckrollen-Paaren (98), zwischen welchen der Kabeleinziehdraht (12) läuft.

10. Vorrichtung nach einem der Ansprüche 5 bis 9, gekennzeichnet durch eine, vorzugsweise an eine der Druckrollen (58) gekoppelte Meßeinheit zur Messung der Drahtvorschubgeschwindigkeit (v_{D}), vorzugsweise in Form eines digitalen Meßwertaufnehmers.

11. Vorrichtung nach einem der Ansprüche 5 bis 10, gekennzeichnet durch eine, vorzugsweise mit einem auf dem Kabelschutzrohr abrollenden Tastrad (34) verbundene Geschwindigkeits-Meßeinheit (36) zur Messung der Rohrextrusionsgeschwindigkeit (v_{R}), vorzugsweise in Form eines digitalen Meßwertaufnehmers.

12. Vorrichtung nach Anspruch 11, gekennzeichnet durch eine an die beiden Meßeinheiten angeschlossene Auswerteschaltung (50), welche aus der Differenz der gemessenen Geschwindigkeiten (v_{R}, v_{D}) ein Regelsignal zur Regelung der Drahtvorschubgeschwindigkeit und/oder der Rohrextrusionsgeschwindigkeit abgibt, im Sinne einer Verringerung der Differenz.

13. Vorrichtung nach Anspruch 12, dadurch gekennzeichnet, daß die Auswerteschaltung (50) eine Rohrlängen-Feststelleinheit (62) (Meßeinrichtung) umfaßt.

14. Vorrichtung nach Anspruch 13, dadurch gekennzeichnet, daß die Rohrlängen-Feststelleinheit (62) einen an einen der beiden digitalen Meßwertaufnehmer angeschlossenen Impulszähler umfaßt.

15. Extrudiertes Kabelschutzrohr (16) mit konstantem Querschnitt und mit bei der Extrusion eingesetztem Kabeleinziehdraht (12), welcher mindestens die Länge des Kabelschutzrohrs (16) hat,
dadurch gekennzeichnet,
daß der gerichtete Draht im Kabelschutzrohr (16) der Rohrachse des aufgewickelten Kabelschutzrohrs (16) mehr oder weniger folgt, und daß der Innenumfang (94) des Kabelschutzrohrs (16) sowie die Oberfläche des Kabeleinziehdrahts (12) bei der Extrusion mit Gleitmittel versehen sind.

## Claims

1. Process for the production of flexible cable protection sheaths (16) with cable pulling wire (12), whereby the cable pulling wire (12) is introduced in an injection head (24) for cable protection sheath and is then guided through a wire guiding tube (66) separate from the injection head (24) for cable protection sheaths, whereby this tube holds the wire (12) at a distance from the inside surface of the cable protection sheath (94) until fastening of the cable protection sheath (16) is at least partially achieved while the cable pulling wire (12) moves with an advancing speed (vD) at least equal to the extrusion speed of the cable protection sheath (vR), characterized by the fact that the pulling wire is directed in a wire straightnening device (98) which is directly inserted in the wire guiding tube (66) crossing the injection head (24) and that a lubricant is sprayed through the wire guiding tube (66) end onto the area of the wire guiding tube (96) on the cable pulling wire (12) as well as on the inside surface of the cable protection sheath (94).

2. Process according to claim 1, characterized by the fact that a mineral oil, a silicon oil or an other organic liquid such as glycerine is used as a lubricant.

3. Process according to claim 1, characterized by the fact that organic products such as waxes and especially a paraffine or an olefine or PTFE (Polytetrafluorethylene) are used as a lubricant.

4. Process according to one of the preceeding claims, characterized by the fact that the lubricant is sprayed with adduction of gas (with propellant gas), or under liquid pressure.

5. Device for the production of cable protection sheaths (16) with cable pulling wire (12) according to the process described in one of the preceeding claims, with an injection head (24) for cable protection sheaths in which the cable pulling wire (12) can be introduced, with a wire guiding tube (66) separate from the injection head (24) of the cable protection sheath, whereby this tube holds the wire (12) at a distance from the inside surface (94) of the cable protection sheath until fastening of the cable protection sheath (16) is at least partially achieved, with a wire advancing device (26) in order to guide the cable pulling wire (12) through the injection head (24) in the wire guiding tube (66) characterized by the fact that a wire straightening device is foreseen for the cable pulling wire (12) immediately before the insertion of the cable pulling wire (12) into the wire guiding tube (66) and that a lubricant can be fed through the wire guiding tube (66) in order to be sprayed on the cable pulling wire (12) as well as on the inside surface (94) of the cable protection sheath in the end area of the wire guiding tube (96).

6. Device according to claim 5, characterized by the fact that the wire guiding tube (66) is designed to be able to move axially in the injection head (24).

7. Device according to claim 6, characterized by the fact that the wire guiding tube (66) has a double wall (wall 70,72) in order to allow adduction of the lubricant.

8. Device according to claims 6 and 7, characterized by the fact that at least one lubricant injection nozzle (92) is foreseen at the end of the wire tube (96) entering the cable protection sheath (16).

9. Device according to one of the claims 5 to 8, characterized by the fact that a wire advancing device (26) designed in the form of a wire straightening device has at least one set of pressure rolls (98) and preferably 4 sets synchronically driven and between which the cable pulling wire (12) runs.

10. Device according to one of the claims 5 to 9, characterized by a measuring element preferably coupled to one of the pressure rolls (58) for measuring the moving speed of the wire (vD) and preferably designed as digital measuring detector.

11. Device according to one of the claims 5 to 10, characterized by a speed measuring device (36) connected to a detecting roll (34) sliding on the cable protection sheath and designed to measure the extrusion speed of the sheath (vR), preferably designed as a digital measuring detector.

12. Device according to claim 11, characterized by a control circuit (50), connected to the two measuring elements which gives a regulation signal according to the measured speed difference (vR), (vD) in order to regulate the moving speed of the wire and/or the extrusion speed of the sheath in order to limit this difference.

13. Device according to claim 12, characterized by the fact that the control circuit (50) includes a unit for determining the sheath length (62) (measuring unit).

14. Device according claim 13, characterized by the fact that the measuring unit for the sheath length (62) includes an impulsion counter connected to one of the two digital measuring detectors.

15. Extruded cable protection sheath (16) with constant cross-section in which during extrusion a cable pulling wire (12) is introduced having at least the same lenght as the cable protection sheath (16) characterized in that the straightened pulling wire inside the cable protection sheath follows substantially the axis of the unwinded sheath (16) and in which the inside periphery (94) of the cable protection sheat (16) as well as the cable pulling wire (12) are provided with a lubricant during the extrusion.

## Revendications

1. Procédé pour la fabrication de gaines de protection flexibles pour câbles (16) avec fil de tirage du câble (12), où l'on introduit le fil de tirage du câble (12) dans une tête d'injection (24) pour gaine de protection de câble en le faisant passer ensuite dans un tube de guidage de fil (66) écarté de la tête d'injection (24) pour gaine de protection de câble, ce tube maintenant le fil (12) à distance de la surface intérieure de la gaine de protection du câble (94) jusqu'à la fixation au moins partielle de la gaine de protection du câble (16) tandis que le fil de tirage du câble (12) avance avec une vitesse d'avance (vD) qui est au moins égale à la vitesse d'extrusion de la gaine de protection du câble (vR), caractérisé en ce que le fil de tirage du câble (12) est dressé dans un dispositif de dressage de fil (98) qui est inséré ensuite immédiatement dans le tube de guidage du fil (66) traversant la tête d'injection (24) et que l'on pulvérise un lubrifiant amené par le tube de guidage du fil (66) dans la zone de l'extrémité du tube de guidage du fil (96) sur le fil de tirage du câble (12) ainsi que sur la surface intérieure de la gaine de protection du câble (94).

2. Procédé selon la revendication 1, caractérisé en ce que l'on utilise comme lubrifiant une huile minérale, une huile de silicone ou un autre liquide organique comme par exemple de la glycérine.

3. Procédé selon la revendication 1, caractérisé en ce que l'on utilise comme lubrifiant des produits organiques comme par exemple des cires et en particulier une paraffine ou une oléfine ou bien du PTFE (Polytétrafluorethylène);

4. Procédé selon l'une des revendications précédentes, caractérisé en ce que l'on pulvérise le lubrifiant soit avec adduction de gaz (avec gaz propulseur), soit sous pression de liquide.

5. Dispositif pour la fabrication de gaines de protection de câble (16) avec fil de tirage du câble (12) selon le procédé décrit dans l'une des revendications précédentes, avec une tête d'injection (24) pour gaines de protection de câble dans lequel le fil de tirage du câble (12) peut être inséré, avec un tube de guidage du fil (66) écarté de la tête d'injection (24) de la gaine de protection du câble, ce tube maintenant le fil (12) à distance de la surface intérieure (94) de la gaine de protection du câble jusqu'à la fixation au moins partielle de la gaine de protection du câble (16), avec un dispositif d'avancement du fil (26) pour faire avancer le fil du tirage du cable (12) à travers la tête d'injection (24) dans le tube de guidage du fil (66) caractérisé en ce que l'on prévoit un dispositif de dressage du fil pour le fil de tirage du câble (12) immédiatement avant l'insertion du fil de tirage du câble (12) dans le tube de guidage du fil (66) et qu'un lubrifiant peut être amené par le tube de guidage du fil (66) pour être pulvérisé sur le fil de tirage du câble (12) ainsi que sur la surface intérieure (94) de la gaine de protection du câble dans la zone de l'extrémité du tube de guidage du fil (96).

6. Dispositif selon la revendication 5, caractérisé en ce que le tube de guidage du fil (66) est conçu de manière à pouvoir se déplacer axialement dans la tête d'injection (24).

7. Dispositif selon la revendication 6, caractérisé en ce que le tube de guidage du fil (66) présente une double paroi (paroi 70, 72) pour permettre l'adduction du lubrifiant.

8. Dispositif selon la revendication 6 et 7, caractérisé en ce que au moins une buse d'injection de lubrifiant (92) est prévue à l'extrémité du tube du fil (96) pénétrant dans la gaine de protection du câble (16).

9. Dispositif selon l'une des revendications 5 à 8 caractérisé en ce que un dispositif d'avancement du fil (26) conçu sous forme d'un dispositif de dressage du fil comporte au moins une paire de galets de pression (98) et de préférence 4 paires entraînées par synchronisme et entre lesquelles passent le fil de tirage du câble (12).

10. Dispositif selon l'une des revendications 5 à 9, caractérisé par un élément de mesure couplé de préférence à l'un des galets de pression (58) pour mesurer la vitesse d'avancement du fil (vD) et se présentant de préférence sous forme d'un capteur de mesure numérique.

11. Dispositif selon l'un des revendications 5 à 10, caractérisé par un élément de mesure de vitesse (36) connecté à un galet palpeur (34) roulant sur la gaine de protection du câble et destiné à mesurer la vitesse d'extrusion de la gaine (vR) se présentant de préférence sous forme d'un capteur de mesure numérique.

12. Dispositif selon la revendication 11, caractérisé par un circuit de contrôle (50), raccordé aux deux éléments de mesure qui fournit un signal de régulation d'après la différence des vitesses mesurées (vR), (vD) afin de régler la vitesse d'avancement du fil et/ou la vitesse d'extrusion de la gaine afin de réduire cette différence.

13. Dispositif selon la revendication 12, caractérisé en ce que le circuit de contrôle (50) comprend une unité de détermination de la longueur de la gaine (62) (unité de mesure).

14. Dispositif selon la revendication 13, caractérisé en ce qu'une unité de mesure de la longueur de la gaine (62) comprend un compteur d'impulsions raccordé à un des deux capteurs de mesure numériques.

15. Gaine de protection de câble extrudé (16) à section constante et dans laquelle est introduit un fil de tirage du câble (12) ayant au moins la même longueur que celle de la gaine de protection de câble (16), caractérisé en ce que le fil dressé à l'intérieur de la gaine de protection (16) suit plus au moins l'axe de la qaine de protection (16) déroulé et en ce que la surface intérieure (94) de la gaine de protection (16) ainsi que la surface du fil de tirage du câble (12) sont pourvues lors de l'extrusion, d'un lubrifiant.
